# DEMANDE DE BREVET EUROPEEN

(11) **EP 2 189 737 A2**
(43) Date de publication de la demande: **26.05.2010**
(21) Numéro de dépôt: 09306067.1
(22) Date de dépôt: 09.11.2009
(51) Int. Cl.: F25B 39/04

(54) **Condenseur perfectionné**

(30) Priorité: 20.11.2008 FR 0857878
(71) Demandeur: Easytherm, 84260 Sarrians (FR)
(72) Inventeur: RIBO, Ivan, 38410, SAINT MARTIN D'URIAGE (FR)
(74) Mandataire: Denjean, Eric

(57) **Abrégé**

Condenseur (1) perfectionné destiné à assurer le transfert de calories entre un fluide frigorigène et un fluide caloporteur comprenant un cylindre externe (2) dans lequel circule un liquide caloporteur enveloppant au moins un tube (4), dont les extrémités sont connectées à des conduites d'arrivée (5) et de sortie (6) de fluide frigorigène, le tube (4) étant enroulés autour d'un cylindre central (3) dans lequel circule le fluide caloporteur réchauffé à l'issue de l'échange thermique se produisant entre l'eau froide parcourant le cylindre externe et le fluide frigorigène circulant à contre-courant dans ledit tube, caractérisé en ce que le cylindre central (3) est muni, dans sa lumière, d'une résistance électrique (9).

## Description

L'invention concerne le domaine des pompes à chaleur et plus particulièrement, la partie condenseur du système. Les pompes à chaleur fonctionnent selon un principe bien connu qui consiste, pour l'essentiel, à prélever des calories sur une source extérieure dans le but de les transférer à un fluide caloporteur venant réchauffer au sein d'un condenseur, de l'eau ou de l'air, circulant dans un circuit indépendant alimentant des radiateurs ou des ventilo convecteurs.

En version climatisation, la même pompe à chaleur prélève des calories, non pas sur une source extérieure, mais sur l'eau ou l'air circulant dans le circuit indépendant alimentant les radiateurs ou les ventiloconvecteurs. Dans ce cas, les calories prélevées sont rejetées à l'extérieur, le plus souvent par un système de ventilation.

Comme source extérieure de calories, on utilise une source naturelle telle que de l'air ou une source dite "froide" du type eau de source, eau provenant d'un puits, nappe phréatique ou encore captage géothermique. On peut également utiliser des fluides frigorigènes tels que par exemple le R134A, le R407C, le R410A.

Dans le cadre de la présente invention, le transfert de calories est effectué entre un fluide frigorigène et un fluide caloporteur, en particulier de l'eau.

De manière classique, une pompe à chaleur se présente sous la forme d'un circuit fermé associant un condenseur, un compresseur, un détendeur et un évaporateur permettant de puiser des calories sur une source extérieure et de les restituer au fluide caloporteur ou inversement. Pour le chauffage, les calories sont prélevées par évaporation du fluide frigorigène dans l'évaporateur et ensuite restituées au fluide caloporteur, par condensation dudit fluide frigorigène dans le condenseur.

Comme déjà dit, l'invention concerne plus spécifiquement la partie condenseur de la pompe à chaleur, c'est-à-dire la partie où le fluide frigorigène transfert les calories qu'il contient à l'eau circulant dans les radiateurs.

Il existe trois grands types de condenseurs dénommés également "échangeurs".

Il s'agit tout d'abord des échangeurs à serpentins, comprenant un cylindre dans lequel est agencé un serpentin monotubulaire. Il s'avère que ces échangeurs dénommés également "échangeurs annulaires", s'ils présentent une faible perte de charge, sont dotés en revanche, d'un mauvais échange dynamique. Par ailleurs, outre l'encombrement conséquent du système par rapport à la faible surface d'échange, l'échangeur requiert, pour être efficace, un volume de gaz important alors que les préoccupations actuelles sont au contraire de diminuer la quantité de fluide frigorigène nécessaire.

Le second type d'échangeurs correspond aux échangeurs co-axiaux, c'est-à-dire aux échangeurs dans lesquels les surfaces d'échange sont composées de tubes concentriques. Le principal inconvénient de ce type d'échangeur reste celui de la perte de charge.

La troisième catégorie d'échangeurs correspond aux échangeurs à plaques qui ont l'avantage de présenter une grande surface d'échange, mais en revanche requièrent un volume de gaz important. En outre, ce type de dispositif engendre une perte de charge élevée.

Le Demandeur a mis a point et décrit dans le document FR-A-2 913 763 un condenseur ou échangeur fluide frigorigène / eau ne présentant pas les inconvénients ci-dessus et remplissant au contraire les trois conditions cumulatives pour en faire un échangeur fiable et efficace, que sont :
- une quantité de fluide frigorigène la plus faible possible,
- une surface d'échange la plus élevée possible,
- une perte de charge la plus faible possible.

Plus précisément, dans le système proposé, la surface d'échange se présente sous la forme d'une pluralité de tubes torsadés parcourus par le fluide frigorigène et entre lesquels circule, à contre-courant, le fluide caloporteur à réchauffer.

Si cette solution est particulièrement satisfaisante, on reste confronté aux limites bien connues des pompes à chaleur, à savoir une efficacité de chauffage insuffisante en cas de température extérieure négative, inférieure en pratique à -5°C.

Pour résoudre ce problème, il est connu d'associer à la pompe à chaleur une résistance électrique, en particulier sous la forme d'un cumulus. En général, le cumulus est agencé en aval du condenseur, sur le circuit de l'eau réchauffée par ledit condenseur.

L'inconvénient du système reste son encombrement, sa maintenance mais également et surtout sa mise en oeuvre qui nécessite un travail de plomberie important.

Le document WO 82/00338 décrit une installation complexe pour la production d'eau chaude propre à la consommation. L'installation comprend deux chambres dans lesquelles un liquide caloporteur est réchauffé par un condenseur agencé autour d'un cylindre central. Le liquide caloporteur échange ensuite ses calories avec de l'eau circulant dans une conduite agencée à l'intérieur du cylindre central, permettant ainsi de produire de l'eau chaude propre à la consommation. Il y a donc échange thermique entre 3 fluides distinct de sorte que le fluide caloporteur présent dans le cylindre central est dépourvu de calories. L'installation est munie à sa base d'une résistance susceptible de se substituer à la pompe à chaleur en cas de défaillance du système.

Le Demandeur à mis au point un condenseur du type de celui décrit dans le document FR-A-2 913 763, c'est-à-dire comprenant deux tubes concentriques, le tube central incorporant une résistance électrique.

Plus précisément, l'invention a pour objet un condenseur perfectionné destiné à assurer le transfert de calories entre un fluide frigorigène et un fluide caloporteur destiné à alimenter des radiateurs ou ventilo-convecteurs comprenant un cylindre externe dans lequel circule le fluide caloporteur enveloppant au moins un tube, dont les extrémités sont connectées à des conduites d'arrivée et de sortie de fluide frigorigène, le tube étant enroulés autour d'un cylindre central dans lequel circule le fluide caloporteur réchauffé à l'issue du seul échange thermique se produisant entre le fluide caloporteur parcourant le cylindre externe et le fluide frigorigène circulant à contre-courant dans ledit tube, **caractérisé en ce que** le cylindre central est muni, dans sa lumière, d'une résistance électrique.

Selon une caractéristique avantageuse, la résistance est cylindrique et vient obturer le cylindre central, avantageusement au niveau de sa base, par vissage.

Pour permettre de disposer d'un système le plus compact possible, les entrée et sorties de fluides frigorigène sont agencées à la base du condenseur. Il en est de même concernant les entrée et sortie de fluide caloporteur, agencées toute deux latéralement respectivement sur le cylindre externe et sur le cylindre central.

Pour absorber le surplus de pression généré par la dilatation de l'eau, le condenseur est équipé d'une sortie permettant sa connexion à un vase d'expansion.

S'agissant des tubes dans lesquels circule le fluide frigorigène, ceux-ci sont au moins au nombre de 2 et sont rendus solidaires les uns des autres pour former un faisceau de tubes enroulé en spirale autour du cylindre central, le faisceau de tube étant torsadé.

Dans ce mode de réalisation, la pluralité de tubes torsadés permet au fluide caloporteur circulant d'être en contact avec la quasi-totalité de la surface des tubes, le système requérant, du fait du faible diamètre des tubes, une quantité limitée de fluide frigorigène n'engendrant pas de perte de charge. Comme indiqué, les tubes ne sont pas torsadés séparément, mais sont réunis sous forme d'un faisceau, lequel est lui-même torsadé. Cette caractéristique permet de disposer de tubes de longueur identique.

Bien entendu, le nombre de tubes constitutifs du faisceau torsadé n'est pas limité et est déterminé en fonction de la perte de charge admise par le système.

En pratique, le nombre de tubes est compris entre 2 et 10, avantageusement égal à 7.

Pour rendre le système compatible avec les dimensions des échangeurs mis en oeuvre dans les pompes à chaleur, la torsade est de ¼ de tour du faisceau de tubes par tour du cylindre central.

S'agissant de la solidarisation des tubes entre-eux, celle-ci peut être effectuée par tout moyen connu. Pour permettre la circulation du fluide caloporteur au travers de l'ensemble des tubes constitutifs du faisceau, les tubes sont avantageusement solidarisés par le biais d'attaches ou par soudure ponctuelle.

Selon une autre caractéristique, le diamètre des tubes représente entre 0,1 et 0,5 fois le diamètre de la conduite d'arrivée du fluide frigorigène.

Par ailleurs, pour améliorer le coefficient d'échange, le cylindre central est muni d'une double paroi dans laquelle est stocké de l'air, ce qui permet d'éviter tout échange calorique entre l'eau réchauffée et le fluide frigorigène en cours de refroidissement.

L'invention a également pour objet une pompe à chaleur équipée d'un condenseur ci-avant décrit.

L'invention et les avantages qui en découlent ressortiront mieux de l'exemple de réalisation suivant à l'appui des figures annexées.
La figure 1 est une représentation schématique éclatée du condenseur de l'invention en perspective.
La figure 2 est une représentation du condenseur de la figure 1 selon l'angle opposé.
La figure 3 est une représentation schématique de la résistance électrique intégrée au condenseur.

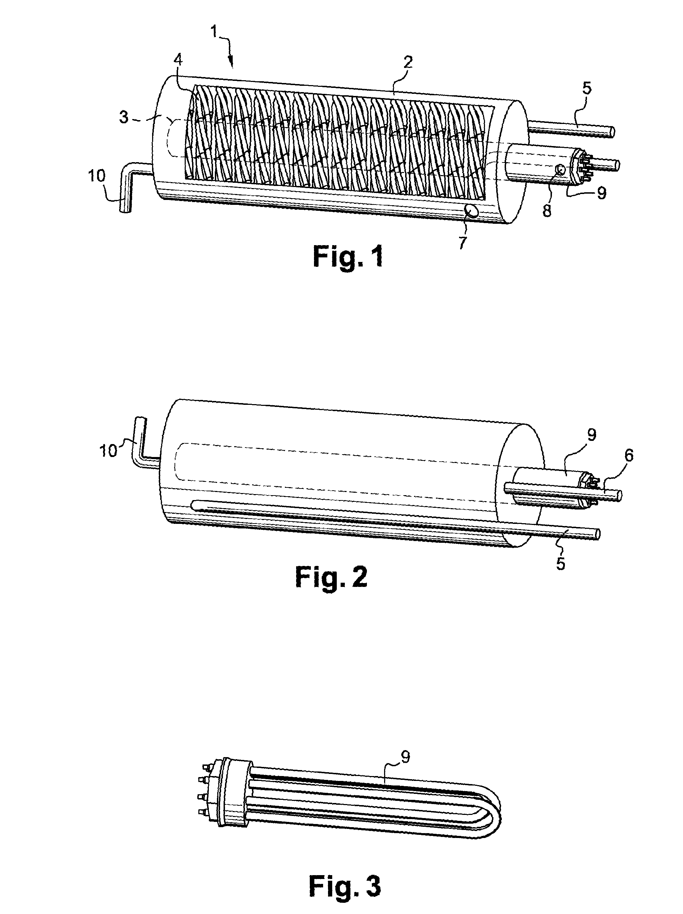

Selon l'invention, le condenseur défini par la référence générale (1) se présente sous la forme d'un cylindre externe (2) renfermant un cylindre central concentrique (3). Dans l'espace séparant la paroi du cylindre externe (2) de celle du cylindre central (3) est agencé le système d'échange, lequel se présente sous la forme d'une pluralité de tubes (4) réunis en un faisceau torsadé tel qu'il apparaît sur la figure 1. Selon l'invention, le faisceau de tubes (4) est alimenté en fluide frigorigène au niveau de son extrémité supérieure par le biais d'un tube d'entrée (5) longeant le cylindre externe (2) depuis la partie inférieure du condenseur. La sortie du fluide frigorigène est assurée par le tube (6) agencé également au niveau de la partie inférieure du condenseur.

S'agissant du fluide caloporteur, celui-ci alimente la cuve externe (2) par le biais d'une entrée (7) positionnée latéralement à l'opposé du sommet de la canalisation d'arrivée (5) de fluide frigorigène de manière à disposer d'un système à contre-courant. La sortie de fluide caloporteur de l'échangeur est effectuée par le biais de la sortie (8) agencée également latéralement en partie inférieure du condenseur.

Sur la figure 1 est également représenté le système d'échange qui est identique dans ce mode de réalisation à celui illustrée dans le document FR-A-2 913 763. Celui-ci se présente sous la forme d'une pluralité de tubes, en pratique 7 tubes (4) réunis en un faisceau par le biais d'attaches. Le faisceau est torsadé tout en étant enroulé en spirale autour du cylindre (3). En pratique, le faisceau est torsadé d'un quart de tour tous les tours de cylindre.

Selon une caractéristique essentielle, le condenseur est équipé d'une résistance électrique (9) venant se visser dans la lumière du tube central (3) à sa base. Cette résistance est plus particulièrement représentée sur la figure 3. Sa puissance est bien entendu adaptée en fonction du volume d'eau à réchauffer. La résistance a donc pour fonction d'augmenter la température de l'eau obtenue par échange avec le fluide frigorigène mais également d'obturer le cylindre central.

Cet échangeur est plus particulièrement destiné à être intégré dans des pompes à chaleur.

Comme déjà dit, le principe de la pompe à chaleur est de prélever des calories sur une source extérieure, puis de les transférer au fluide caloporteur alimentant les radiateurs ou ventiloconvecteurs. L'échange de calories est effectué dans le condenseur. En pratique, le fluide frigorigène, par exemple le R410A, arrive à l'échangeur à l'état gazeux sous une forme comprimée, c'est-à-dire à température élevée. Au contact de l'eau froide parvenant dans le cylindre externe par l'entrée (5) se produit un échange thermique entre l'eau froide et le fluide frigorigène circulant à contre-courant dans les faisceaux de tubes torsadés. Le fluide frigorigène se transforme en liquide une fois ses calories transférées au fluide caloporteur, en pratique l'eau. L'eau chaude circule ensuite dans le tube central (3) à double paroi de sorte qu'il n'y a pas de perte d'échange thermique. Lorsque la température extérieure est particulièrement faible, en pratique inférieure à -5°C, la résistance électrique se met en route automatiquement de sorte à maintenir une température de chauffage satisfaisante. De manière habituelle, la cuve externe est équipée d'un moyen de connexion (10) à un vase d'expansion, non représenté.

L'invention et les avantages qui en découlent ressortent bien de la description précédente, on note en particulier la mise au point d'un condenseur perfectionné particulièrement compact, intégrant une résistance électrique additionnelle permettant d'assurer le chauffage de l'eau quelle que soit les conditions de température extérieures.

## Revendications

1. Condenseur (1) perfectionné destiné à assurer le transfert de calories entre un fluide frigorigène et un fluide caloporteur alimentant des radiateurs ou ventilo convecteurs, comprenant un cylindre externe (2) dans lequel circule le fluide caloporteur enveloppant au moins un tube (4), dont les extrémités sont connectées à des conduites d'arrivée (5) et de sortie (6) de fluide frigorigène, le tube (4) étant enroulés autour d'un cylindre central (3) dans lequel circule le fluide caloporteur réchauffé à l'issue du seul échange thermique se produisant entre le fluide caloporteur parcourant le cylindre externe et le fluide frigorigène circulant à contre-courant dans ledit tube, **caractérisé en ce que** le cylindre central (3) est muni, dans sa lumière, d'une résistance électrique (9).

2. Condenseur (1) selon la revendication 1, **caractérisé en ce que** la résistance (9) est cylindrique et vient obturer le cylindre central (3) au niveau de sa base, par vissage.

3. Condenseur (1) selon la revendication 1, **caractérisé en ce que** les entrée et sorties de fluides frigorigène sont agencées à la base dudit condenseur.

4. Condenseur (1) selon la revendication 1, **caractérisé en ce que** les entrée et sortie de fluide caloporteur sont agencées toute deux latéralement respectivement sur le cylindre externe (7) et sur le cylindre central (8).

5. Condenseur (1) selon la revendication 1, **caractérisé en ce que** les tubes (4) sont au moins au nombre de 2 et sont rendus solidaires les uns des autres pour former un faisceau de tubes enroulé en spirale autour du cylindre central, le faisceau de tube étant torsadé.

6. Condenseur (1) selon la revendication 1, **caractérisé en ce que** le nombre de tubes (4) est compris entre 2 et 10.

7. Condenseur (1) selon la revendication 1, **caractérisé en ce que** le nombre de tubes (4) est de 7.

8. Condenseur (1) selon la revendication 5, **caractérisé en ce que** la torsade du faisceau est d'un quart de tour par tour du cylindre central.

9. Condenseur (1) selon la revendication 9, **caractérisé en ce que** le diamètre des tubes (4) représente entre 0,1 et 0,5 fois le diamètre de la conduite d'arrivée de fluide frigorigène.

10. Pompe à chaleur équipée d'un condenseur selon l'une des revendications 1 à 9.
